# EUROPEAN PATENT SPECIFICATION

(11) **EP 3 076 660 B1**
(45) Date of publication and mention of the grant of the patent: **28.04.2021**
(21) Application number: 16163332.6
(22) Date of filing: 31.03.2016
(51) Int. Cl.: H04N 5/232

(54) **METHOD AND APPARATUS FOR DISPLAYING FRAMING INFORMATION**
VERFAHREN UND VORRICHTUNG ZUR ANZEIGE VON FRAMING-INFORMATIONEN
PROCÉDÉ ET APPAREIL POUR L'AFFICHAGE D'INFORMATIONS DE TRAMAGE

(30) Priority: 31.03.2015 CN 201510150277; 12.11.2015 EP 15194362
(43) Date of publication of application: 05.10.2016
(73) Proprietor: Xiaomi Inc., Beijing 100085 (CN)
(72) Inventor: TANG, Mingyong, Haidian District Beijing 100085 (CN); LIU, Huayijun, Haidian District Beijing 100085 (CN); CHEN, Tao, Haidian District Beijing 100085 (CN)
(74) Representative: Sadler, Peter Frederick

(56) References cited:
- EP-A1- 2 852 138
- WO-A1-2011/106520
- CA-A1- 2 388 766
- US-A1- 2010 214 449
- US-B1- 6 977 676
- US-B1- 8 587 659

## Description

### TECHNICAL FIELD

The present disclosure relates to an electronic technology, and more particularly to a method and an apparatus for displaying framing information.

### BACKGROUND

With the development of science and technology, more and more smart wearable apparatus have entered normal users' lives. The smart wearable apparatus may not only facilitate the users' lives, but also better coordinate the present electronic products. Take smart glasses for example. In the related art, by displaying the images currently collected by a digital camera on smart glasses, the user does not have to view the images currently collected by the digital camera via the display screen of the digital camera, thus reducing the power consumption of the digital camera. However, when it is required to adjust the current framing range of the digital camera, the user also needs to take off the smart glasses and adjust the photographic direction of the digital camera by viewing the frame displayed on the electronic viewfinder (EVF) display screen of the digital camera. In an EVF the image captured by the camera lens is projected electronically onto a display, so that an electronic viewfinder provides a preview directly from the image sensor on a screen such as an LED or LCD screen. Therefore, the operation for adjusting the framing range of the digital camera is relatively cumbersome for the user.

International application WO 2011/106520 describes a system for providing real-time object recognition to a remote user. The system comprises a portable communication device including a camera, at least one client/server host device remote from and accessible by the portable communication device over a network, and a recognition database accessible by the client-server host device or devices. A recognition application residing on the client-server host device or devices is capable of utilizing the recognition database to provide real-time object recognition of visual imagery captured using the portable communication device to the remote user of the portable communication device. A sighted assistant interface is provided through which a panoramic engine presents a constructed augmented reality panorama to a sighted assistant.

US patent US 6977676 describes a camera control system in which an image with a small angle of view and a panoramic image are transmitted to a personal computer to be individually displayed. The user can see not only a detailed image the user desires but also an image surrounding the detailed image in substantially real time, with an indication frame showing the content of the detailed image superimposed on the image surrounding the detailed image.

European patent application EP 2852138 describes smart glasses configured to receive a first input for setting a first region on a preview screen, display a first graphic object indicating the set first region on the display unit, capture the video for the first region according to a capture signal, and when a viewing angle of the preview screen including the set first region deviates more than a predetermined reference range, suspend capturing the video and display a second graphic object indicating an extent of the deviation.

US patent US 8587659 B1 describes a methodology and apparatus that registers images outputted by at least two video camera sensors that are not necessarily boresighted nor co-located together. Preferably this can be performed in real-time at least at video rate. The two video camera sensors can be either of similar or two different modalities (e.g., one can be intensified visible, while the other can be thermal infrared) each possibly with a different field-of-view. The methodology and apparatus take advantage of a combination of Inertial Measurement Units (IMUs) information and image registration between the two camera sensors from computational image processing. In one preferred embodiment, the system uses a rifle mounted weapon sight camera sensor and a helmet mounted sensor camera. The aim point of the weapon sight camera sensor (e.g., typically at the image center) zeroed to the true rifle aim point is digitally overlayed as a reticle on the video image from the helmet sensor, displayed on a head mounted display (HMD). In another embodiment pixel-level image fusion is displayed across the overlapping field-of-view of the rifle mounted camera sensor weapon sight with the helmet mounted camera image.

### SUMMARY

The invention is defined by the independent claims to which reference is now made. Advantageous features are set out in the dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for displaying framing information according to an exemplary embodiment.
Fig. 1B is a schematic diagram of an applicable scene according to an embodiment of the present disclosure.
Fig. 2 is a flow chart showing a method for displaying framing information according to a first exemplary embodiment.
Fig. 3A is a schematic diagram of a system formed by smart glasses and a photographic apparatus and applicable to embodiments of the present disclosure.
Fig. 3B is a schematic diagram of a framing view corresponding to framing information according to an exemplary embodiment of the present disclosure.
Fig. 3C is a first schematic diagram of an image view taken by the smart glasses according to an exemplary embodiment of the present disclosure.
Fig. 3D is a second schematic diagram of an image view taken by the smart glasses according to an exemplary embodiment of the present disclosure.
Fig. 3E is a third schematic diagram of an image view taken by the smart glasses according to an exemplary embodiment of the present disclosure.
Fig. 4 is a flow chart showing a method for displaying framing information, according to a second exemplary embodiment.
Fig. 5 is a flow chart showing a method for displaying framing information, according to a third exemplary embodiment.
Fig. 6 is a block diagram of an apparatus for displaying framing information according to an exemplary embodiment.
Fig. 7 is a block diagram of another apparatus for displaying framing information according to an exemplary embodiment.
Fig. 8 is a block diagram of yet another apparatus for displaying framing information according to an exemplary embodiment.
Fig. 9 is a block diagram of a device applicable for displaying framing information according to an exemplary embodiment.

### DETAILED DESCRIPTION

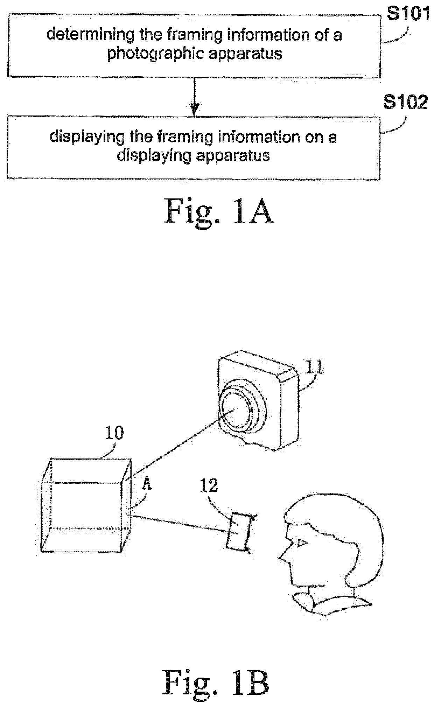

Fig. 1A is a flow chart showing a method for displaying framing information according to an exemplary embodiment. Fig. 1B is a schematic diagram of an applicable scene according to an embodiment of the present disclosure. The method for displaying framing information may be applied in an apparatus with a display function, such as smart glasses. This embodiment is illustrated with reference to Fig. 1B. Referring to FIG. 1A, the method for displaying framing information includes steps S101-S102.

In step S101, the framing information of a photographic apparatus is determined. The framing information is information indicative of the extent of the view area, or view coverage, captured or capturable by the photographic apparatus, and shows the area or coverage that would be included in an image should a picture be taken by the photographic apparatus. In other words, the framing information is indicative of the field of view of the photographic apparatus.

The current framing information of the photographic apparatus is acquired by an electronic viewfinder of the photographic apparatus. The framing information may be a parameter known by or determined by the photographic apparatus' electronic viewfinder, in a similar manner to how the electronic viewfinders may determine information regarding shutter speed, aperture or the like. In one embodiment, the framing information may be transmitted to the displaying apparatus via a wireless or wire transmission. The wireless transmission includes WIFI, Bluetooth, etc, and the wire transmission includes USB, etc. In other embodiments the framing information may be determined by the recipient displaying apparatus.

In step S102, the framing information is displayed on the displaying apparatus.

In one embodiment, the framing information may be displayed on the displaying apparatus in a manner of parallel light beam. In another embodiment, the framing information may also be displayed on the displaying apparatus in a frame mode.

The embodiment shown in Fig. 1A is illustrated below with reference to Fig. 1B. A cube 10 is disposed at one place, and the photographic apparatus 11 and the user are located at a side A of the cube 10. When a photo is to be taken of the cube 10 by the photographic apparatus 11, if the photographic apparatus 11 is currently located in a different location to the user, for example in a higher place, the user cannot directly view the framing information of the photographic apparatus 11 from a display screen of the photographic apparatus 11. In this case, the current framing information of the photographic apparatus 11 may be displayed on the displaying apparatus 12 by the method of the present disclosure, such that the user may view the current framing information of the photographic apparatus 11 on the displaying apparatus 12.

In this embodiment, by displaying the framing information of the photographic apparatus on the displaying apparatus, the user may directly view a framing range of the photographic apparatus via the displaying apparatus, such that a separation of the photographic apparatus and a framing display is realized. The framing range is the field of view of the image captured by the camera, which is determined by the location and direction of facing of the camera. For the user, the method simplifies an operation for adjusting the framing range of the digital camera.

In an embodiment, displaying the framing information on the displaying apparatus may include: converting the framing information into a parallel light beam, in which a boundary of the parallel light beam is determined by the framing information; and projecting the parallel light beam onto the displaying apparatus.

In an embodiment, the displaying apparatus may be smart glasses, and displaying the framing information on the displaying apparatus may include: determining a framing view, to which the framing information determined by the photographic device corresponds; determining a percentage of a view repeated between the framing view and an image view collected by a photographic device of the smart glasses in the image view; and displaying the framing information on a lens of the smart glasses according to the percentage of the view repeated.

In an embodiment, displaying the framing information on a lens of the smart glasses according to the percentage of the view repeated may include: displaying the framing information on the lens of the smart glasses in a full frame mode, if the percentage of the view repeated is greater than a first predetermined threshold; displaying the framing information on the lens of the smart glasses in a partial frame mode, if the percentage of the view repeated is less than the first predetermined threshold and greater than a second predetermined threshold.

In an embodiment, the method may further include: displaying a prompt message for guiding a user to adjust a view direction, if the percentage of the view repeated is less than the second predetermined threshold.

In an embodiment, the displaying apparatus may be smart glasses, and displaying the framing information on the displaying apparatus may include: determining a framing view, to which the framing information corresponds; determining a similarity value between a main subject in the framing view and a main subject in an image view collected by a photographic device of the smart glasses; displaying the framing information on a lens of the smart glasses according to the similarity value.

In an embodiment, displaying the framing information on a lens of the smart glasses according to the similarity value may include: displaying the framing information on the lens of the smart glasses in a full frame mode, if the similarity value is greater than a third predetermined threshold; displaying the framing information on the lens of the smart glasses in a partial frame mode, if the similarity value is less than the third predetermined threshold and greater than a fourth predetermined threshold.

In an embodiment, the method may further include: displaying a prompt message for guiding a user to adjust a view direction, if the similarity value is less than the fourth predetermined threshold.

Concerning details about how to display the framing information of the photographic apparatus, reference is made to the following embodiments.

As so far, with the method above provided by the present disclosure, the separation of the photographic apparatus and the display device displaying the framing information is realized, and for the user, it simplifies the operation for adjusting the framing range of the digital camera.

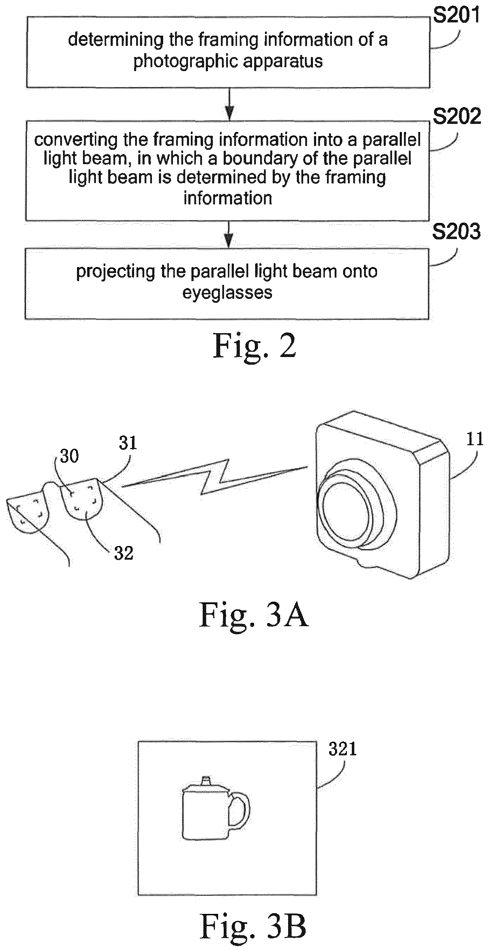

Fig. 2 is a flow chart showing the method for displaying framing information according to a first exemplary embodiment. This embodiment takes eyeglasses as the displaying apparatus for example to make an exemplary description. As shown in Fig. 2, the method includes following steps.

In step S201, the framing information of a photographic apparatus is determined or received.

The description of the step S201 may refer to the description of the step S101 described above, which will not be explained in detail herein.

In step S202, the framing information is converted into parallel light beams, and a boundary of the parallel light beams is determined by the framing information.

In an embodiment, the framing information may be converted into the parallel light beams via an electronic-to-optical transducer, such as a laser device, or a projector.

In step S203, the parallel light beams are projected onto the eyeglasses.

In an embodiment, by mounting a micro projecting device on the eyeglasses, the framing information of the photographic apparatus is projected onto a lens of the eyeglasses, so as to achieve a perspective effect for the lens.

In this embodiment, by projecting the framing information of the photographic apparatus onto the eyeglasses in a manner of parallel light beams, the separation of the photographic apparatus and the framing display is realized. Moreover, because only a boundary of the framing information is projected onto the eyeglasses, the user may view the current framing range of the photographic apparatus by the eyeglasses, and simultaneously a true scene before his or her eyes can also be viewed by the eyeglasses, such that an actual visual field of the user will not be affected.

It may be understood by those skilled in the art that, in above embodiments of the present disclosure, the parallel light beams may also be projected onto the displaying apparatus via a projector by converting the framing information into the parallel light beams.

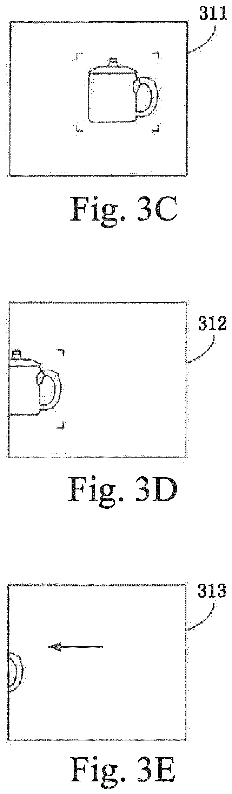

Fig. 3A is a schematic diagram of a system formed by the smart glasses and the photographic apparatus and applicable to embodiments of the present disclosure. Fig. 3B is a schematic diagram of a framing view corresponding to framing information according to an exemplary embodiment of the present disclosure. The framing view, or framed view, shows the view encompassed by the camera EVF according to the framing information. Fig. 3C is a first schematic diagram of an image view taken by the smart glasses according to an exemplary embodiment of the present disclosure. Fig. 3D is a second schematic diagram of an image view taken by the smart glasses according to an exemplary embodiment of the present disclosure. Fig. 3E is a third schematic diagram of an image view taken by the smart glasses according to an exemplary embodiment of the present disclosure. As shown in Fig. 3A, smart glasses 31 and a photographic apparatus 11 may communicate in a wireless manner such as WIFI or infrared. In this way, the photographic apparatus 11 may transmit the framing information to the smart glasses 31. The photographic apparatus 11 may determine the framing information of a lens of the photographic apparatus 11 via an electronic viewfinder disposed on the photographic apparatus 11, and transmits the framing information determined by the viewfinder to the smart glasses 31. The smart glasses 31 display the framing information of the photographic apparatus 11 on a lens 32 of the smart glasses 31 in a frame manner, outlining a frame containing the framing view. In an embodiment, the photographic apparatus 11 may be a device capable of collecting digital images, such as a digital camera, a sports camera, an SLR (Single Lens Reflex) camera, or a terminal such as a mobile phone or tablet having a digital camera function that includes an electronic viewfinder.

Fig. 3B illustrates a current framing view 321 of the photographic apparatus 11, in which the electronic viewfinder of the photographic apparatus 11 determines the framing information via the framing view. Fig. 3C illustrates an image view 311 collected by a photographic device of the smart glasses 31 from one angle of the smart glasses 31 being worn by the user. Fig. 3D illustrates an image view 312 collected by the photographic device of the smart glasses 31 from another angle of the smart glasses 31 being worn by the user. Fig. 3E illustrates an image view 313 collected by the photographic device of the smart glasses 31 from yet another angle of the smart glasses 31 being worn by the user.

For example, in one exemplary scene, as shown in Figs. 3B and 3C, a cup appears in both a current framing view 321 of the photographic apparatus 11 and the image view 311 currently taken by the smart glasses 31, and the cup appears in respective views at essentially the same angle. In this case, it is determined that the framing view is essentially consistent with a visual direction of the user, and thus the framing information of the photographic apparatus 11 may be displayed on the lens 32 of the smart glasses 31 in a frame 30 mode, the frame 30 indicating the image currently being captured by the EVF of the photographic apparatus 11. When the user wears the smart glasses 31, he or she may obtain the current framing range of the photographic apparatus 11 via the frame 30. In another exemplary scene, as shown in Fig. 3D, the image view 312 is collected by the photographic device of the smart glasses 31 from another angle while the user wears the smart glasses 31. It is seen from contents of the framing view 321 of the photographic apparatus 11 and the image view 312 that a part of the cup in the image view 312 is beyond a visual range of the smart glasses 31, indicating that there is a deviation between the smart glasses 31 and a current framing direction of the photographic apparatus 11. In other words, the field of view currently captured by the EVF of the photographic apparatus 11 does not correspond to the field of view of the photographic device of the smart glasses 31. The framing view of the photographic apparatus 11 may then be displayed on the lens 32 in a partial frame mode, whereby only a portion of the frame 30 is displayed indicating that at least a portion of the field of view of the current framing view is not contained within the current field of view of the photographic device of the smart glasses, so as to remind the user to adjust a view direction by a small amount. When it is detected that the framing view is essentially consistent with the visual direction of the user, the framing information is displayed on the lens 32 in the mode of the frame 30. In yet another exemplary scene, as shown in Fig. 3E, the image view 313 is collected by the photographic device of the smart glasses 31 from yet another angle while the user wears the smart glasses 31. It is seen from contents of the framing view 321 of the photographic apparatus 11 and the image view 313 that the cup in the image view 313 is beyond the current visual range of the user on the whole, indicating that there is a large deviation between the field of view of the smart glasses 31 and the current framing direction, or field of view, of the photographic apparatus 11. In this case, prompt information for leading the user to adjust his or her visual direction may be displayed on the lens 32 to guide the user to adjust his or her visual direction, until it is detected that the framing information is essentially consistent with the visual direction of the user, and then the framing information is displayed on the lens 32 in the manner of the frame 30.

For a situation in which the visual range of the photographic apparatus cannot be directly viewed using the electronic viewfinder of the photographic apparatus (for example, the photographic apparatus is a sports camera and the user has to take photos by fixing the sports camera on his or her head or positioning it close to the ground), by displaying the framing information of the photographic apparatus on the output of the displaying apparatus, the present embodiment may allow the user to directly view the framing range of the photographic apparatus via the displaying apparatus, so as to realize the separation or difference of the photographic apparatus and the framing displaying. For the user, it simplifies the operation of adjusting the framing range of the digital camera. If the displaying apparatus used is a pair of smart glasses, because the image currently collected by the photographic apparatus is not presented on one or more lenses of the smart glasses, an actual visual field of the user will not be affected, such that while viewing the current framing range of the photographic apparatus via the smart glasses, the user may also view a true scene before his or her eyes, thus improving the experience of the user when using the smart glasses.

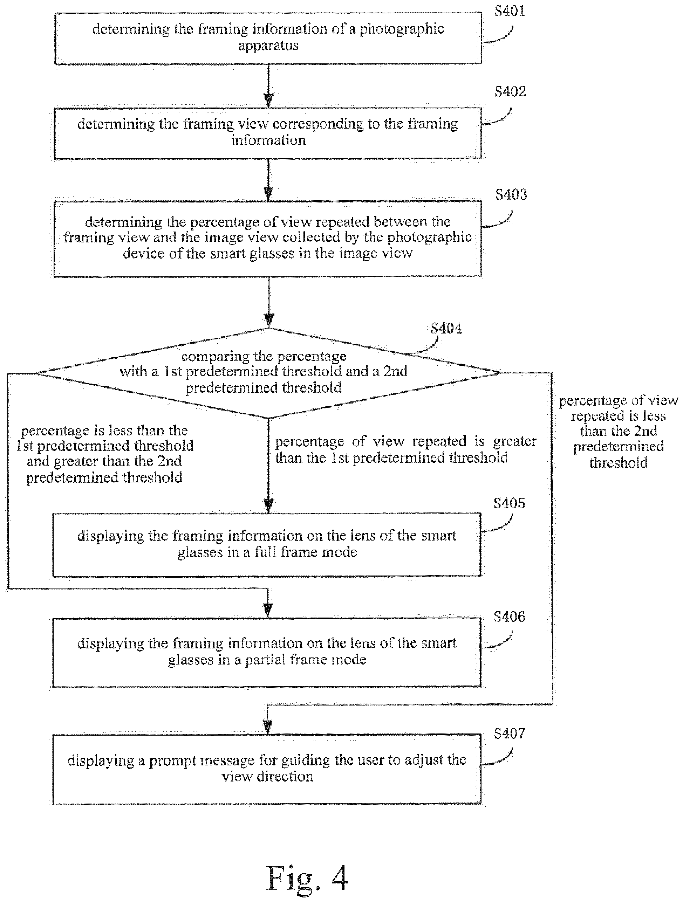

Fig. 4 is a flow chart showing a method for displaying framing information according to a second exemplary embodiment. In this embodiment, with the above method provided by embodiments of the present disclosure, referring to Figs. 3A-3E, as an example framing information is displayed on a lens of smart glasses according to a percentage of a view repeated between a framing view of an EVF corresponding to the framing information and an image view collected by a photographic device of the smart glasses. As shown in Fig. 4, the method includes the following steps.

In step S401, the framing information of a photographic apparatus is determined.

The description of the step S401 may refer to the description of the step S101 described above, which will not be explained in detail herein.

In step S402, the framing view corresponding to the framing information is determined and/or transmitted.

In an embodiment, the framing view may be transmitted to the smart glasses in a manner as the same as above step S401.

In step S403, the percentage of the view, or image, repeated between the current framing view and the current image view collected by the photographic device of the smart glasses in the image view is determined.

In an embodiment, by analyzing a similarity and/or an consistency of a corresponding relationship of gray information of the framing view corresponding to the framing information and the image view collected by the photographic device of the smart glasses, the percentage of the view repeated therebetween is determined. For example, the framing view is used as a reference, and a range of the view repeated between the image view collected by the photographic device of the smart glasses and a framing view collected by the photographic apparatus is determined. For example, a resolution of the image view collected by the photographic device of the smart glasses is 640 × 480, and the number of pixels in the range of the view repeated between the image view collected by the photographic device of the smart glasses and the image view collected by the photographic apparatus is 320 × 150, such that it may be obtained that the percentage of the view repeated therebetween is (320 × 150)/(640 × 480)=0.156.

In step S404, the percentage of the view, or image, repeated is compared with a first predetermined threshold and a second predetermined threshold, and the framing information is displayed on the lens of the smart glasses according to a comparing result. For example, if the percentage of the view repeated is greater than the first predetermined threshold, a step S405 is executed; if the percentage of the view repeated is less than the first predetermined threshold and greater than the second predetermined threshold, a step S406 is executed; if the percentage of the view repeated is less than the second predetermined threshold, a step S407 is executed.

In an embodiment, the first predetermined threshold and the second predetermined threshold may be determined according to resolutions of the photographic apparatus and the photographic device of the smart glasses, thus ensuring a calculation accuracy of the percentage of the view repeated.

In step S405, if the percentage of the view repeated is greater than the first predetermined threshold, the framing information is displayed on the lens of the smart glasses in a full frame mode.

As shown in Fig. 3C, the cup appears in the image view 311 currently taken by the smart glasses 31. Therefore, if it is determined that both the framing view of the photographic device's EVF and the image view of the smart glasses contain a scene of the cup, and the percentage of the view repeated between the framing view of the photographic apparatus 11 and the image view of the smart glasses is greater than the first predetermined threshold, it is indicated that the cup appears in respective views at essentially the same angle. In this case, it may be determined that the framing view is consistent with the image view, such that the framing information may be displayed on the lens 32 of the smart glasses 31 in a full frame 30 mode. That is, when the user wears the smart glasses 31, the current framing range of the photographic apparatus 11 may be obtained as indicated by the full frame 30. In an embodiment, the full frame 30 may be displayed on the lens 32 in a manner indicating that the image view of the smart glasses and the framing view of the EVF are consistent, for example by displaying the full frame in a particular predetermined color. For example, when the framing view is essentially consistent with the image view, the framing information is presented on the lens 32 in a green frame mode.

In step S406, if the percentage of the view repeated is less than the first predetermined threshold and greater than the second predetermined threshold, the framing information is displayed on the lens of the smart glasses in a partial frame mode.

As shown in Fig. 3D, the image view 312 is collected by the photographic device of the smart glasses 31 from a different angle while the user wears the smart glasses 31. It is seen from contents of the framing view 321 of the photographic apparatus 11 and the image view 312 that it may be determined by an image detection technology that the percentage of the view repeated between the framing view 321 taken by the photographic apparatus 11 and the image view 312 of the smart glasses will be reduced. For example, when the percentage of the view repeated is less than the first predetermined threshold and greater than the second predetermined threshold, it is indicated that there is a deviation between the smart glasses 31 and the current framing direction of the photographic apparatus 11, and partial framing information 30 may be displayed on the lens 32 in a manner indicating that the image view of the smart glasses and the framing view of the EVF are only partially consistent, for example by displaying the partial frame in a different predetermined color mode to the full frame mode, such as a red frame mode, so as to prompt the user to adjust their view direction by a small amount. When it is detected that the framing information is essentially consistent with second framing information, the framing information 30 is displayed on the lens 32.

In step S407, if the percentage of the view repeated is less than the second predetermined threshold, a prompt message for guiding the user to adjust the view direction is displayed on the lens.

As shown in Fig. 3E, the image view 313 is collected by the photographic device of the smart glasses 31 from yet another angle while the user wears the smart glasses 31. It is seen from contents of the framing view 321 of the photographic apparatus 11 and the image view 313 that it may be determined by the image detection technology that the percentage of the view repeated between the framing view 321 taken by the photographic apparatus 11 and the image view 313 of the smart glasses will be reduced. For example, when the percentage of the view repeated is less than the second predetermined threshold, it is indicated that the cup in the image view 313 is generally beyond the visual range of the smart glasses 31, and there is a large deviation between the current image captured by the smart glasses 31 and the current framing direction, or field of view, of the photographic apparatus 11. At this moment, a prompt may be given on the lens 32 for prompting the direction in which the user needs to move, so as to guide the user to adjust their view direction until it is detected that the framing information is essentially consistent with the image view captured by the photographic apparatus of the smart glasses, and then the framing information 30 is displayed on the lens 32. For example, by prompting the user via an arrow to adjust his or her current visual range, the current visual range of the photographic apparatus 11 may be obtained by the user.

For a situation in which the visual range of the photographic apparatus cannot be directly viewed by the viewfinder of the photographic apparatus (for example, the photographic apparatus is a sports camera and the user has to take photos by fixing the sports camera on his or her head or close to the ground), in this embodiment, by determining the displaying mode of the framing information of the photographic apparatus on the lens of the smart glasses according to the percentage of the view repeated, an actual visual field of the user may not be affected. While viewing the current framing range of the photographic apparatus via the smart glasses, the user may also view a true scene before his or her eyes, thus improving the experience of the user using the smart glasses.

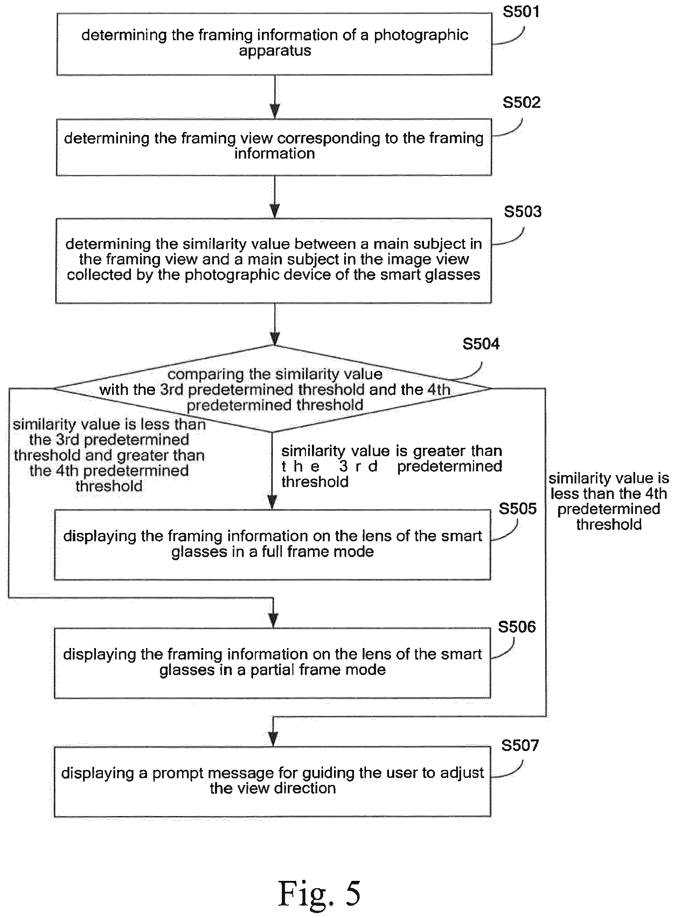

Fig. 5 is a flow chart showing a method for displaying framing information according to a third exemplary embodiment. In this embodiment, as with the above methods provided by embodiments of the present disclosure, referring to Figs. 3A-3E, in an example the framing information of the photographic apparatus EVF is displayed on a lens of a pair of smart glasses according to a similarity value between a main subject in the framing view corresponding to the framing information of the photographic apparatus 11 and a main subject in an image view collected by a photographic device of the smart glasses. As shown in Fig. 5, the method includes following steps.

In step S501, the framing information of an EVF of a photographic apparatus is determined.

The description of the step S501 may refer to the description of the step S101 described above, which will not be explained in detail herein.

In step S502, the framing view corresponding to the framing information is determined and/or transmitted.

The description of the step S502 may refer to the description of the step S402 described above, which will not be explained in detail herein.

In step S503, the similarity value between the main subject in the framing view of the EVF and the main subject in the image view collected by the photographic device of the smart glasses is determined. The main subject is an object to be photographed. It may, for example, be the largest foreground object in the framing view and in the image view. The manner of determining the main subject is not important to embodiments of the invention, and it may be determined according to any appropriate technique. For example, image recognition software or object recognition software for finding and identifying objects in an image may be used.

In an embodiment, by analyzing a similarity of a corresponding relationship of a view content (i.e., the main subject in this embodiment) of the framing view collected by the photographic apparatus and the image view collected by the photographic device of the smart glasses, the similarity value therebetween is determined.

In step S504, the similarity value is compared with a third predetermined threshold and a fourth predetermined threshold, and the framing information is displayed on a lens of the smart glasses according to a comparing result. For example, if the similarity value is greater than the third predetermined threshold, a step S505 is executed; if the similarity value is less than the third predetermined threshold and greater than the fourth predetermined threshold, a step S506 is executed; if the similarity value is less than the fourth predetermined threshold, a step S507 is executed.

In an embodiment, the third predetermined threshold and the fourth predetermined threshold may be determined according to resolutions of the photographic apparatus 11 and the photographic device of the smart glasses, thus ensuring a calculation accuracy of the percentage of the view that is repeated.

In step S505, if the similarity value is greater than the third predetermined threshold, the framing information is displayed on the lens of the smart glasses in a full frame mode.

As shown in Fig. 3C, and as shown in Figs. 3B-3C, the cup appears in both the current framing view 321 of the photographic apparatus 11 and the image view 311 currently taken by the smart glasses 31, if it is determined by an image detection technology that the similarity value therebetween is greater than the third predetermined threshold, it is indicated that the cup appears in respective views at essentially the same angle. In this case, it may be determined that the framing direction, or field of view, of the framing view 321 is consistent with that of the image view 311, such that the framing information of the photographic apparatus 11 may be displayed on the lens 32 of the smart glasses 31 in a frame 30 mode. That is, when the user wears the smart glasses 31, the current framing range of the photographic apparatus 11 may be obtained by the frame 30. As with the previous embodiment, the frame 30 may be displayed on the lens 32 in a manner indicating that the image view of the smart glasses and the framing view of the EVF are essentially consistent, for example by displaying the frame in color. For example, when the framing direction of the framing view 321 is essentially consistent with that of the image view 311, the frame 30 is presented on the lens 32 in a green frame 30 mode.

In step S506, if the similarity value is less than the third predetermined threshold and greater than the fourth predetermined threshold, the framing information is displayed on the lens of the smart glasses in a partial frame mode.

As shown in Fig. 3D, the image view 312 is collected by the photographic device of the smart glasses 31 from a different angle while the user wears the smart glasses 31. It is seen from contents of the framing view 321 of the photographic apparatus 11 and the image view 312 that, it may be determined by the image detection technology that the similarity value between the cup in the framing view 321 taken by the photographic apparatus 11 and the cup in the image view 312 will be reduced. For example, when the similarity value is less than the third predetermined threshold and greater than the fourth predetermined threshold, it is indicated that there is a deviation between the smart glasses 31 and the current framing direction, or field of view, of the photographic apparatus 11, and the framing information may be displayed on the lens 32 in a partial frame mode, particularly, displayed on the lens 32 in a manner indicating that the image view of the smart glasses and the framing view of the EVF are only partially consistent, for example by displaying the partial frame in a different color mode to the full frame mode, such as a red frame mode, so as to prompt the user to adjust a view direction by a small amount. When it is detected that the framing information is essentially consistent with second framing information, the framing information is displayed on the lens 32 in a full frame mode.

In step S507, if the similarity value is less than the fourth predetermined threshold, a prompt message for guiding the user to adjust the view direction is displayed on the lens.

As shown in Fig. 3E, the image view 313 is collected by the photographic device of the smart glasses 31 from yet another different angle while the user wears the smart glasses 31. It is seen from contents of the framing view 321 of the photographic apparatus 11 and the image view 313 that it may be determined by the image detection technology that the similarity value between the cup in the framing view 321 taken by the photographic apparatus 11 and the cup in the image view 313 will be reduced. For example, when the similarity value is less than the fourth predetermined threshold, it is indicated that the cup in the image view 313 is generally beyond the visual range of the smart glasses 31, and there is a deviation between the smart glasses 31 and the current framing direction, or field of view, of the photographic apparatus 11. At this moment, a prompt may be given on the lens 32 for prompting the direction in which the user needs to move, so as to guide the user to adjust their view direction until it is detected that the framing information is essentially consistent with the second framing information, the framing information is displayed on the lens 32 in the full frame mode. For example, by prompting the user via an arrow to adjust his or her current visual range, the current visual range of the photographic apparatus 11 may be obtained by the user.

For a situation that the visual range of the photographic apparatus cannot be directly viewed by the viewfinder of the photographic apparatus (for example, the photographic apparatus is a sports camera and the user has to take photos by fixing the sports camera on his or her head or close to the ground), in this embodiment, by determining the displaying mode of the framing information of the photographic apparatus on the lens of the smart glasses according to the similarity value, an actual visual field of the user may not be affected. While viewing the current framing range of the photographic apparatus via the smart glasses, the user may also view a true scene before his or her eyes, thus improving the experience of the user for using the smart glasses.

It may be understood by those skilled in the art that, the percentage of the view repeated and the main subject are taken as exemplary examples for illustration. The consistency of the visual range between the framing view of the photographic apparatus EVF and the image view of the smart glasses may also be determined according to information such as image characteristics of the framing view and the image view and a texture characteristic of the image view. The exemplary illustration of the percentage of the view repeated and the main subject described above do not restrict the present disclosure.

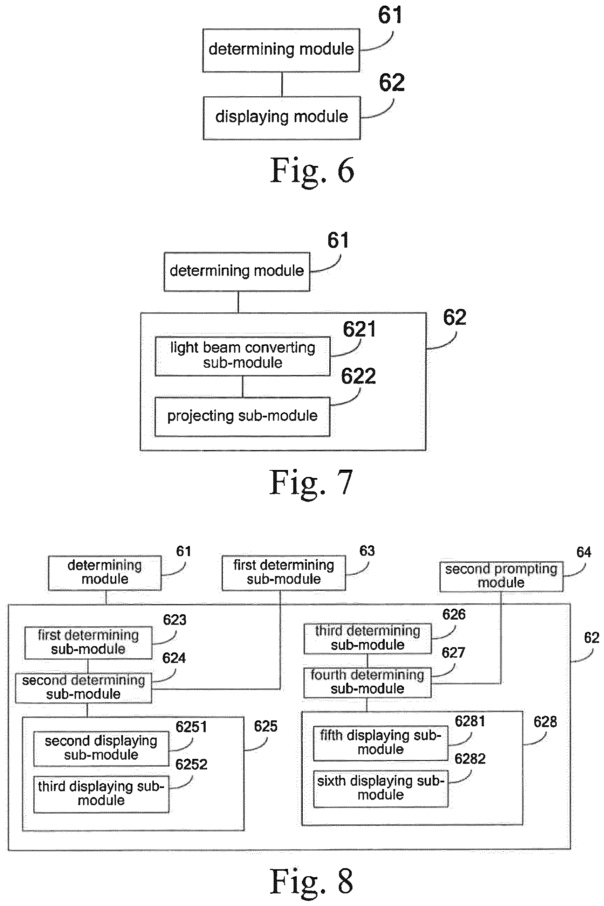

Fig. 6 is a block diagram of an apparatus for displaying framing information according to an exemplary embodiment. As shown in Fig. 6, the apparatus for displaying framing information includes: a determining or receiving module 61 configured to determine or receive framing information of a photographic apparatus; and a displaying module 62 configured to display the framing information from the module 61 on a displaying apparatus.

Fig. 7 is a block diagram of another apparatus for displaying framing information according to an exemplary embodiment. Based on the embodiment illustrated in Fig. 6, the displaying module 62 may include: a light beam converting sub-module 621 configured to convert the framing information from the module 61 into a parallel light beam, in which a boundary of the parallel light beam is determined by the framing information; a projecting sub-module 622 configured to project the parallel light beam converted by the light beam converting sub-module 621 onto the displaying apparatus.

Fig. 8 is a block diagram of yet another apparatus for displaying framing information according to an exemplary embodiment. Based on the embodiment illustrated in Fig. 6 or Fig. 7, the displaying module 62 may include: a first determining sub-module 623 configured to determine a framing view corresponding to the framing information from the module 61; a second determining sub-module 624 configured to determine a percentage of a view repeated between the framing view determined by first determining sub-module 623 and an image view collected by a photographic device of the smart glasses in the image view; a first displaying sub-module 625 configured to display the framing information on a lens of the smart glasses according to the percentage of the view repeated determined by the second determining sub-module 624.

In an embodiment, the first displaying sub-module 625 may include: a second displaying sub-module 6251 configured to display the framing information on the lens of the smart glasses in a full frame mode, if the percentage of the view repeated determined by the second determining sub-module 624 is greater than a first predetermined threshold; a third displaying sub-module 6252 configured to display the framing information on the lens of the smart glasses in a partial frame mode, if the percentage of the view repeated determined by the second determining sub-module 624 is less than the first predetermined threshold and greater than a second predetermined threshold.

In an embodiment, the apparatus may further include: a first prompting module 63 configured to display a prompt message for guiding a user to adjust a view direction on the lens, if the percentage of the view repeated determined by the second determining sub-module 624 is less than the second predetermined threshold.

In an embodiment, the displaying module 62 may include: a third determining sub-module 626 configured to determine a framing view corresponding to the framing information from the module 61; a fourth determining sub-module 627 configured to determine a similarity value between a main subject in the framing view determined by the third determining sub-module 626 and a main subject in an image view collected by a photographic device of the smart glasses; a fourth displaying sub-module 628 configured to display the framing information on a lens of the smart glasses according to the similarity value determined by the fourth determining sub-module 627.

In an embodiment, the fourth displaying sub-module 628 may include: a fifth displaying sub-module 6281 configured to display the framing information on the lens of the smart glasses in a full frame mode, if the similarity value determined by the fourth determining sub-module 627 is greater than a third predetermined threshold; a sixth displaying sub-module 6282 configured to display the framing information on the lens of the smart glasses in a partial frame mode, if the similarity value determined by the fourth determining sub-module 627 is less than the third predetermined threshold and greater than a fourth predetermined threshold.

In an embodiment, the apparatus may further include: a second prompting module 64 configured to display a prompt message for guiding a user to adjust a view direction on the lens, if the similarity value determined by the fourth determining sub-module 627 is less than the four predetermined threshold.

With respect to the apparatus in the above embodiments, the specific manners for performing operations for individual modules therein have been described in detail in the embodiments regarding the methods, which will not be elaborated herein.

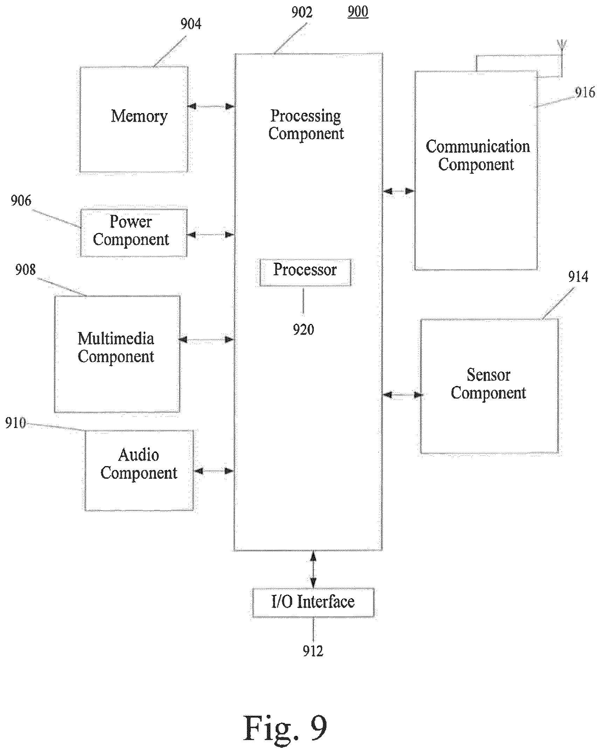

Fig. 9 is a block diagram of a device applicable for displaying framing information according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here.

## Claims

1. A method for displaying a frame, applied in smart glasses having a photographic device and a separate digital photographic apparatus, the method comprising:
determining a frame indicating the field of view of the current image acquired by an electronic viewfinder of the digital photographic apparatus;
determining whether the field of view of the digital photographic apparatus is contained within the current field of view of a photographic device of the smart glasses; and
displaying the frame on a lens of the smart glasses (S102) when the field of view of the digital photographic apparatus is contained within the current field of view of the photographic device of the smart glasses;
**characterized in that** the method further comprises:
obtaining, using the digital photographic apparatus, the current image acquired by the electronic viewfinder of the digital photographic apparatus (S402);
determining a percentage of the pixels repeated in the field of view of the current image acquired by the electronic viewfinder of the digital photographic apparatus and a current field of view of the photographic device of the smart glasses (S403);
displaying the frame on a lens of the smart glasses according to the percentage of the pixels repeated.

2. The method according to claim 1, wherein displaying the frame on a lens of the smart glasses according to the percentage of the pixels repeated comprises:
displaying the frame on the lens of the smart glasses in a full frame mode, if the percentage of the pixels repeated is greater than a first predetermined threshold (S405), wherein in a full frame mode a full frame is displayed on the lens of the smart glasses; and
displaying the frame on the lens of the smart glasses in a partial frame mode, if the percentage of the view repeated is less than the first predetermined threshold and greater than a second predetermined threshold (S406), wherein in a partial frame mode only a portion of the frame is displayed on the lens of the smart glasses.

3. The method according to claim 2, further comprising:
displaying a prompt message for guiding a user to adjust a view direction, if the percentage of the pixels repeated is less than the second predetermined threshold (S407).

4. The method according to claim 1, wherein the method further comprises:
obtaining, using the digital photographic apparatus, a current framing view (S502);
determining a similarity value between a main subject contained in the current framing view and a main subject contained in a current image view of a photographic device of the smart glasses, the current image view being a current image collected by the photographic device of the smart glasses (S503);
displaying the frame on a lens of the smart glasses according to the similarity value.

5. The method according to claim 4, wherein displaying the frame on a lens of the smart glasses according to the similarity value comprises:
displaying the frame on the lens of the smart glasses in a full frame mode if the similarity value is greater than a third predetermined threshold (S505), wherein in a full frame mode the main subject is contained within the current image view;
displaying the frame on the lens of the smart glasses in a partial frame mode if the similarity value is less than the third predetermined threshold and greater than a fourth predetermined threshold (S506), wherein in a partial frame mode only a portion of the main subject is contained within the current image view.

6. The method according to claim 5, further comprising:
displaying a prompt message for guiding a user to adjust a view direction, if the similarity value is less than the fourth predetermined threshold (S507).

7. Smart glasses for displaying a frame, comprising:
a photographic device;
a receiving or determining module (61), configured to receive or determine a frame indicating the field of view of the current image acquired by an electronic viewfinder of a separate digital photographic apparatus and to determine whether the field of view of the digital photographic apparatus is contained within the current field of view of the photographic device of the smart glasses; and
a displaying module (62), configured to display the frame on a lens of the smart glasses when the field of view of the digital photographic apparatus is contained within the current field of view of the photographic device of the smart glasses;
**characterized in that** the smart glasses further comprise:
a first determining or obtaining sub-module (623), configured to determine or obtain, using the digital photographic apparatus, the current image acquired by the electronic viewfinder of the digital photographic apparatus;
a second determining sub-module (624), configured to determine a percentage of the pixels repeated in the field of view of the current image acquired by the electronic viewfinder of the digital photographic apparatus and a current field of view of the photographic device of the smart glasses;
a first displaying sub-module (625), configured to display the frame on a lens of the smart glasses according to the percentage of the pixels repeated as determined by the second determining sub-module.

8. The smart glasses according to claim 7, wherein the first displaying sub-module (625) comprises:
a second displaying sub-module (6251), configured to display the frame on the lens of the smart glasses in a full frame mode, if the percentage of the pixels repeated, as determined by the second determining sub-module, is greater than a first predetermined threshold, wherein in a full frame mode a full frame is displayed on the lens of the smart glasses;
a third displaying sub-module (6252), configured to display the frame on the lens of the smart glasses in a partial frame mode, if the percentage of the image repeated as determined by the second determining sub-module is less than the first predetermined threshold and greater than a second predetermined threshold, wherein in a partial frame mode only a portion of the frame is displayed on the lens of the smart glasses.

9. The smart glasses according to claim 7, wherein the displaying module (62) comprises:
a third determining or obtaining sub-module (626), configured to determine or obtain using the digital photographic apparatus, the current framing view;
a fourth determining sub-module (627), configured to determine a similarity value between a main subject in the current framing view determined by the third determining sub-module and a main subject in a current image view collected by the photographic device of the smart glasses;
a fourth displaying sub-module (628), configured to display the frame on a lens of the smart glasses according to the similarity value determined by the fourth determining sub-module.

10. The smart glasses according to claim 9, wherein the fourth displaying sub-module (628) comprises:
a fifth displaying sub-module (6281), configured to display the frame on the lens of the smart glasses in a full frame mode, if the similarity value determined by the fourth determining sub-module is greater than a third predetermined threshold, wherein in a full frame mode the frame information is contained within the current image view;
a sixth displaying sub-module (6282), configured to display the frame on the lens of the smart glasses in a partial frame mode, if the similarity value determined by the fourth determining sub-module is less than the third predetermined threshold and greater than a fourth predetermined threshold, wherein in a partial frame mode only a portion of the frame information is contained within the current image view.

11. A system for displaying framing information, the system being configured to carry out the method of any of claims 1 to 6.

## Patentansprüche

1. Verfahren zum Anzeigen eines Rahmens, das in einer intelligenten Brille angewendet wird, die eine fotografische Vorrichtung und eine separate digitale fotografische Einrichtung aufweist, wobei das Verfahren Folgendes beinhaltet:
Bestimmen eines Rahmens, der das Blickfeld des aktuellen Bilds anzeigt, das von einem elektronischen Sucher der digitalen fotografischen Einrichtung erfasst wird;
Bestimmen, ob das Blickfeld der digitalen fotografischen Einrichtung innerhalb des aktuellen Blickfelds einer fotografischen Vorrichtung der intelligenten Brille enthalten ist; und
Anzeigen des Rahmens auf einer Linse der intelligenten Brille (S102), wenn das Blickfeld der digitalen fotografischen Einrichtung innerhalb des aktuellen Blickfelds der fotografischen Vorrichtung der intelligenten Brille enthalten ist;
**dadurch gekennzeichnet, dass** das Verfahren Folgendes beinhaltet:
Erhalten, unter Verwendung der digitalen fotografischen Einrichtung, des von dem elektronischen Sucher der digitalen fotografischen Einrichtung erfassten aktuellen Bilds (S402);
Bestimmen eines Anteils der Pixel, die in dem Blickfeld des aktuellen Bilds, das von dem elektronischen Sucher der digitalen fotografischen Einrichtung erfasst wird, und einem aktuellen Blickfeld der fotografischen Vorrichtung der intelligenten Brille (S403) wiederholt werden;
Anzeigen des Rahmens auf einer Linse der intelligenten Brille gemäß dem Anteil der wiederholten Pixel.

2. Verfahren nach Anspruch 1, wobei das Anzeigen des Rahmens auf einer Linse der intelligenten Brille gemäß dem Anteil der wiederholten Pixel Folgendes beinhaltet:
Anzeigen des Rahmens auf der Linse der intelligenten Brille in einem Vollbildmodus, falls der Anteil der wiederholten Pixel größer als eine erste vorbestimmte Schwelle ist (S405), wobei in einem Vollbildmodus ein ganzer Rahmen auf der Linse der intelligenten Brille angezeigt wird, and
Anzeigen des Rahmens auf der Linse der intelligenten Brille in einem Teilbildmodus, wenn der Anteil der wiederholten Ansicht kleiner als die erste vorbestimmte Schwelle und größer als eine zweite vorbestimmte Schwelle ist (S406), wobei in einem Teilbildmodus nur ein Teil des Rahmens auf der Linse der intelligenten Brille angezeigt wird.

3. Verfahren nach Anspruch 2, das ferner Folgendes aufweist:
Anzeigen einer Aufforderungsnachricht zum Anleiten eines Benutzers zum Einstellen einer Blickrichtung, wenn der Anteil der wiederholten Pixel kleiner als die zweite vorbestimmte Schwelle ist (S407).

4. Verfahren nach Anspruch 1, wobei das Verfahren ferner Folgendes aufweist:
Erhalten einer aktuellen Rahmungsansicht unter Verwendung der digitalen fotografischen Einrichtung (S502);
Bestimmen eines Ähnlichkeitswertes zwischen einem in der aktuellen Rahmungsansicht enthaltenen Hauptmotiv und einem in einer aktuellen Bildansicht einer fotografischen Vorrichtung der intelligenten Brille enthaltenen Hauptmotiv, wobei die aktuelle Bildansicht ein von der fotografischen Vorrichtung der intelligenten Brille aufgenommenes aktuelles Bild ist (S503) ;
Anzeigen des Rahmens auf einer Linse der intelligenten Brille gemäß dem Ähnlichkeitswert.

5. Verfahren nach Anspruch 4, wobei das Anzeigen des Rahmens auf einer Linse der intelligenten Brille gemäß dem Ähnlichkeitswert Folgendes beinhaltet:
Anzeigen des Rahmens auf der Linse der intelligenten Brille in einem Vollbildmodus, falls der Ähnlichkeitswert größer als ein dritter vorbestimmter Schwellenwert ist (S505), wobei in einem Vollbildmodus das Hauptmotiv innerhalb der aktuellen Bildansicht enthalten ist;
Anzeigen des Rahmens auf der Linse der intelligenten Brille in einem Teilbildmodus, falls der Ähnlichkeitswert kleiner als der dritte vorbestimmte Schwellenwert und größer als ein vierter vorbestimmter Schwellenwert ist (S506), wobei in einem Teilbildmodus nur ein Teil des Hauptmotivs innerhalb der aktuellen Bildansicht enthalten ist.

6. Verfahren nach Anspruch 5, das ferner Folgendes aufweist:
Anzeigen einer Aufforderungsnachricht zum Anleiten eines Benutzers zum Anpassen einer Blickrichtung, falls der Ähnlichkeitswert kleiner als der vierte vorbestimmte Schwellenwert ist (S507).

7. Intelligente Brille zum Anzeigen eines Rahmens, die Folgendes beinhaltet:
eine fotografische Vorrichtung;
ein Empfangs- oder Bestimmungsmodul (61), das gestaltet ist zum Empfangen oder Bestimmen eines Rahmens, der das Blickfeld des aktuellen Bilds anzeigt, das von einem elektronischen Sucher einer separaten digitalen fotografischen Einrichtung erfasst wird, und zum Bestimmen, ob das Blickfeld der digitalen fotografischen Einrichtung innerhalb des aktuellen Blickfelds der fotografischen Vorrichtung der intelligenten Brille enthalten ist, and
ein Anzeigemodul (62), das gestaltet ist zum Anzeigen des Rahmens auf einer Linse der intelligenten Brille, wenn das Blickfeld der digitalen fotografischen Einrichtung innerhalb des aktuellen Blickfelds der fotografischen Vorrichtung der intelligenten Brille enthalten ist;
**dadurch gekennzeichnet, dass** die intelligente Brille ferner Folgendes beinhaltet:
ein erstes Bestimmungs- oder Erhaltungsuntermodul (623), das gestaltet ist zum Bestimmen oder Erhalten des aktuellen Bilds, das von dem elektronischen Sucher der digitalen fotografischen Einrichtung erfasst wird, unter Verwendung der digitalen fotografischen Einrichtung;
ein zweites Bestimmungsuntermodul (624), das gestaltet ist zum Bestimmen eines Anteils der Pixel, die im Blickfeld des aktuellen Bilds, das von dem elektronischen Sucher der digitalen fotografischen Einrichtung erfasst wird, und einem aktuellen Blickfeld der fotografischen Vorrichtung der intelligenten Brille wiederholt werden;
ein erstes Anzeigeuntermodul (625), das gestaltet ist zum Anzeigen des Rahmens auf einer Linse der intelligenten Brille gemäß dem Anteil der wiederholten Pixel, wie von dem zweiten Bestimmungsuntermodul bestimmt.

8. Intelligente Brille nach Anspruch 7, wobei das erste Anzeigeuntermodul (625) Folgendes beinhaltet:
ein zweites Anzeigeuntermodul (6251), das gestaltet ist zum Anzeigen des Rahmens auf der Linse der intelligenten Brille in einem Vollbildmodus, falls der Anteil der wiederholten Pixel, wie von dem zweiten Bestimmungsuntermodul bestimmt, größer als ein erster vorbestimmter Schwellenwert ist, wobei in einem Vollbildmodus ein ganzer Rahmen auf der Linse der intelligenten Brille angezeigt wird;
ein drittes Anzeigeuntermodul (6252), das gestaltet ist zum Anzeigen des Rahmens auf der Linse der intelligenten Brille in einem Teilbildmodus, falls der Anteil des wiederholten Bilds, wie von dem zweiten Bestimmungsuntermodul bestimmt, kleiner als der erste vorbestimmte Schwellenwert und größer als ein zweiter vorbestimmter Schwellenwert ist, wobei in einem Teilbildmodus nur ein Teil des Rahmens auf der Linse der intelligenten Brille angezeigt wird.

9. Intelligente Brille nach Anspruch 7, wobei das Anzeigemodul (62) Folgendes beinhaltet:
ein drittes Bestimmungs- oder Erhaltungsuntermodul (626), das gestaltet ist zum Bestimmen oder Erhalten der aktuellen Rahmungsansicht unter Verwendung der digitalen fotografischen Einrichtung;
ein viertes Bestimmungsuntermodul (627), das gestaltet ist zum Bestimmen eines Ähnlichkeitswertes zwischen einem Hauptmotiv in der von dem dritten Bestimmungsuntermodul bestimmten aktuellen Rahmungsansicht und einem Hauptmotiv in einer von der fotografischen Vorrichtung der intelligenten Brille aufgenommenen aktuellen Bildansicht;
ein viertes Anzeigeuntermodul (628), das gestaltet ist zum Anzeigen des Rahmens auf einer Linse der intelligenten Brille gemäß dem von dem vierten Bestimmungsuntermodul bestimmten Ähnlichkeitswert.

10. Intelligente Brille nach Anspruch 9, wobei das vierte Anzeigeuntermodul (628) Folgendes beinhaltet:
ein fünftes Anzeigeuntermodul (6281), das gestaltet ist zum Anzeigen des Rahmens auf der Linse der intelligenten Brille in einem Vollbildmodus, falls der von dem vierten Bestimmungsuntermodul bestimmte Ähnlichkeitswert größer als ein dritter vorbestimmter Schwellenwert ist, wobei in einem Vollbildmodus die Rahmeninformationen innerhalb der aktuellen Bildansicht enthalten sind;
ein sechstes Anzeigeuntermodul (6282), das gestaltet ist zum Anzeigen des Rahmens auf der Linse der intelligenten Brille in einem Teilbildmodus, falls der von dem vierten Bestimmungsuntermodul bestimmte Ähnlichkeitswert kleiner als der dritte vorbestimmte Schwellenwert und größer als ein vierter vorbestimmter Schwellenwert ist, wobei in einem Teilbildmodus nur ein Teil der Rahmeninformationen innerhalb der aktuellen Bildansicht enthalten ist.

11. System zum Anzeigen von Rahmungsinformationen, wobei das System zum Ausführen des Verfahrens nach einem der Ansprüche 1 bis 6 gestaltet ist.

## Revendications

1. Procédé d'affichage d'un cadre, appliqué dans des lunettes intelligentes ayant un dispositif photographique et un appareil photographique numérique séparé, le procédé comprenant :
déterminer un cadre indiquant le champ de vue de l'image courante acquise par un viseur électronique de l'appareil photographique numérique ;
déterminer si le champ de vue de l'appareil photographique numérique est contenu dans le champ de vue courant d'un dispositif photographique des lunettes intelligentes ; et
afficher le cadre sur une lentille des lunettes intelligentes (S 102) lorsque le champ de vue de l'appareil photographique numérique est contenu dans le champ de vue courant du dispositif photographique des lunettes intelligentes ;
**caractérisé en ce que** le procédé comprend en outre :
obtenir, en utilisant l'appareil photographique numérique, l'image courante acquise par le viseur électronique de l'appareil photographique numérique (S402) ;
déterminer un pourcentage des pixels répétés dans le champ de vue de l'image courante acquise par le viseur électronique de l'appareil photographique numérique et dans un champ de vue courant du dispositif photographique des lunettes intelligentes (S403);
afficher le cadre sur une lentille des lunettes intelligentes conformément au pourcentage des pixels répétés.

2. Procédé selon la revendication 1, dans lequel afficher le cadre sur une lentille des lunettes intelligentes conformément au pourcentage des pixels répétés comprend :
afficher le cadre sur la lentille des lunettes intelligentes dans un mode plein cadre, si le pourcentage des pixels répétés est plus grand qu'un premier seuil prédéterminé (S405), dans lequel dans un mode plein cadre un cadre complet est affiché sur la lunette des lunettes intelligentes ; et
afficher le cadre sur la lentille des lunettes intelligentes dans un mode de cadre partiel, si le pourcentage des pixels répétés est moindre que le premier seuil prédéterminé et plus grand qu'un deuxième seuil prédéterminé (S406), dans lequel dans un mode de cadre partiel seule une partie du cadre est affichée sur la lentille des lunettes intelligentes.

3. Procédé selon la revendication 2, comprenant en outre :
afficher un message d'invite pour guider un utilisateur à ajuster une direction de vue, si le pourcentage des pixels répétés est moindre que le deuxième seuil prédéterminé (S407).

4. Procédé selon la revendication 1, où le procédé comprend en outre :
obtenir, en utilisant l'appareil photographique numérique, une vue du cadrage courant (S502) ;
déterminer une valeur de similarité entre un sujet principal contenu dans la vue de cadrage courant et un sujet principal dans une vue d'image courante d'un dispositif photographique des lunettes intelligentes, la vue d'image courante étant une image courante recueillie par le dispositif photographique des lunettes intelligentes (S503) ;
afficher le cadre sur une lentille des lunettes intelligentes conformément à la valeur de similarité.

5. Procédé selon la revendication 4, dans lequel afficher le cadre sur une lentille des lunettes intelligentes conformément à la valeur de similarité comprend :
afficher le cadre sur la lentille des lunettes intelligentes dans un mode plein cadre si la valeur de similarité est plus grande qu'un troisième seuil prédéterminé (S505), dans lequel dans un mode plein cadre le sujet principal est contenu dans la vue d'image courante ;
afficher le cadre sur la lentille des lunettes intelligentes dans un mode de cadre partiel si la valeur de similarité est moindre que le troisième seuil prédéterminé et plus grande qu'un quatrième seuil prédéterminé (S506), dans lequel dans un mode de cadre partiel seule une partie du sujet principal est contenue dans la vue d'image courante.

6. Procédé selon la revendication 5, comprenant en outre :
afficher un message d'invite pour guider un utilisateur à ajuster une direction de vue, si la valeur de similarité est moindre que le quatrième seuil prédéterminé (S507).

7. Lunettes intelligentes pour afficher un cadre, comprenant :
un dispositif photographique ;
un module de réception ou de détermination (61), configuré pour recevoir ou déterminer un cadre indiquant le champ de vue de l'image courante acquise par un viseur électronique d'un appareil photographique numérique séparé et pour déterminer si le champ de vue de l'appareil photographique numérique est contenu dans le champ de vue courant du dispositif photographique des lunettes intelligentes ; et
un module d'affichage (62), configuré pour afficher le cadre sur une lentille des lunettes intelligentes lorsque le champ de vue de l'appareil photographique numérique est contenu dans le champ de vue courant du dispositif photographique des lunettes intelligentes ;
**caractérisées en ce que** les lunettes intelligentes comprennent en outre:
un premier sous-module de détermination ou d'obtention (623), configuré pour déterminer ou obtenir, en utilisant l'appareil photographique numérique, l'image courante acquise par le viseur électronique de l'appareil photographique numérique ;
un deuxième sous-module de détermination (624), configuré pour déterminer un pourcentage de pixels répétés dans le champ de vue de l'image courante acquise par le viseur électronique de l'appareil photographique numérique et dans un champ de vue courant du dispositif photographique des lunettes intelligentes ;
un premier sous-module d'affichage (625), configuré pour afficher le cadre sur une lentille des lunettes intelligentes conformément au pourcentage des pixels répétés tel que déterminé par le deuxième sous-module de détermination.

8. Lunettes intelligentes selon la revendication 7, dans lesquelles le premier sous-module d'affichage (625) comprend :
un deuxième sous-module d'affichage (6251), configuré pour afficher le cadre sur la lentille des lunettes intelligentes dans un mode plein cadre, si le pourcentage des pixels répétés, tel que déterminé par le deuxième sous-module de détermination, est plus grand qu'un premier seuil prédéterminé, dans lequel dans un mode plein cadre un cadre complet est affiché sur la lentille des lunettes intelligentes ;
un troisième sous-module d'affichage (6252), configuré pour afficher le cadre sur la lentille des lunettes intelligentes dans un mode de cadre partiel, si le pourcentage des pixels répétés, tel que déterminé par le deuxième sous-module de détermination, est moindre que le premier seuil prédéterminé et plus grand qu'un deuxième seuil prédéterminé, dans lequel dans un mode de cadre partiel seule une partie du cadre est affichée sur la lentille des lunettes intelligentes.

9. Lunettes intelligentes selon la revendication 7, dans lesquelles le module d'affichage (62) comprend :
un troisième sous-module de détermination ou d'obtention (626), configuré pour déterminer ou obtenir en utilisant l'appareil photographique numérique, la vue du cadrage courant ;
un quatrième sous-module de détermination (627), configuré pour déterminer une valeur de similarité entre un sujet principal dans la vue du cadrage courant déterminée par le troisième sous-module de détermination et un sujet principal dans une vue d'image courante recueillie par le dispositif photographique des lunettes intelligentes ;
un quatrième sous-module d'affichage (628), configuré pour afficher le cadre sur une lentille des lunettes intelligentes conformément à la valeur de similarité déterminée par le quatrième sous-module de détermination.

10. Lunettes intelligentes selon la revendication 9, dans lequel le quatrième sous-module d'affichage (628) comprend :
un cinquième sous-module d'affichage (6281), configuré pour afficher le cadre sur la lentille des lunettes intelligentes dans un mode plein cadre, si la valeur de similarité déterminée par le quatrième sous-module de détermination, est plus grande qu'un troisième seuil prédéterminé, dans lequel dans un mode plein cadre les informations de cadrage sont contenues dans la vue de l'image courante ;
un sixième sous-module d'affichage (6282), configuré pour afficher le cadre sur la lentille des lunettes intelligentes dans un mode de cadre partiel, si la valeur de similarité déterminée par le quatrième sous-module de détermination, est moindre que le troisième seuil prédéterminé et plus grande qu'un quatrième seuil prédéterminé, dans lequel dans un mode de cadre partiel seule une partie des informations de cadrage sont contenues dans la vue de l'image courante.

11. Système d'affichage d'informations de cadrage, le système étant configuré pour mettre en œuvre le procédé selon l'une quelconque des revendications 1 à 6.
